Europäisches Patentamt

(19) European Patent Office

Office européen des brevets

(11) Publication number: **0 293 204**
**A2**

## (12) EUROPEAN PATENT APPLICATION

(21) Application number: 88304791.2

(22) Date of filing: 26.05.88

(51) Int. Cl.⁴: **B 29 C 47/92**

(30) Priority: 28.05.87 GB 8712546

(43) Date of publication of application:
30.11.88 Bulletin 88/48

(84) Designated Contracting States:
AT BE CH DE ES FR GB GR IT LI LU NL SE

(71) Applicant: BICC Public Limited Company
Devonshire House Mayfair Place
London W1X 5FH (GB)

(72) Inventor: Hughes, James Howard
10 Cotebrooke Drive
Upton Cheshire. CH2 1RD (GB)

(74) Representative: Gadsden, Robert Edward et al
BICC plc Group Patents & Licensing Dept. Network
House 1, Ariel Way
London W12 7SL (GB)

(54) Extruder linearisation.

㊗ An extrusion machine includes an extruder screw (3) driven by a screw drive motor (4), and a line drive (8) which controls the line speed of the extruder. A central control unit generates a first voltage signal to control the screw drive motor (4) and a second voltage signal to control the line drive (8). A linearising unit (12) is programmed with predetermined voltage data comprising values for a selected one of either the first or second voltage signals, and corresponding values of output voltages. The linearising unit (12) repeatedly calculates the value of the selected voltage signal, compares the calculated value with the predetermined voltage data, and supplies a linearised output voltage to either the screw drive motor (4) or the line drive (8). The predetermined voltage data can be generated by measuring the diameter of the extrudate produced by the extruder for different values of the first and second voltage signals.

Fig.1

EP 0 293 204 A2

## Description

## Extruder Linearisation

This invention relates to the control of extrusion machinery, and in particular to the linearisation of extrusion machinery to counteract the variation in weight/metre of extrudate produced when the extruder is running at different speeds.

Accordingly there is provided an extrusion machine including an extruder screw; a drive motor adapted to drive the extruder screw; a central control unit adapted to generate a control voltage signal to control the drive motor; and an electronic processing unit programmable with predetermined voltage data comprising values for control voltages and corresponding values for output voltages, the electronic processing unit being adapted to calculate repeatedly the value of the control voltage signal generated by the central control unit, compare said calculated value with the values for control voltages in the predetermined voltage data to determine a corresponding output voltage for the calculated value, and supply said output voltage to the drive motor to drive the extruder screw.

It has been recognised by the Applicant that the throughput of a screw extruder is not linearly proportional to the speed of the extruder screw. Thus a throughput of x kg/min at a screw speed of y rev/min does not necessarily lead to a throughput of 2x kg/min at a screw speed of 2y rev/min. The predetermined voltage data programmed in the electronic processing unit is used to effect adjustments to the analogue control voltage signal in order to compensate for this known non-linearity.

The invention further resides in an extrusion machine including an extruder screw; a screw drive motor adapted to drive the extruder screw; line drive means for controlling the line speed of the extruder; a central control unit adapted to generate a first control voltage signal to control the screw drive motor and a second control voltage signal to control the line drive means, the first and second control voltage signals being proportional one to the other such as to produce an extrudate having a desired weight/metre; and an electronic processing unit programmable with predetermined voltage data comprising values for a selected control voltage and corresponding values for output voltages, the selected control voltage being either the first or second control voltage signal, the electronic processing unit being adapted to calculate repeatedly the value of the selected control voltage generated by the central control unit, compare said calculated value with the values for the selected control voltage in the predetermined voltage data to determine a corresponding output voltage for the calculated value, and supply said output voltage to a selected one of either the screw drive motor or the line drive means, the predetermined voltage data being such as to maintain the extrudate substantially at the desired weight/metre regardless of the line speed of the extruder.

Preferably the selected control voltage is the first control voltage signal and the electronic processing unit is adapted to supply the output voltage to the screw drive motor to drive the extruder screw. In this way the first voltage signal from the central control unit is modified by the electronic processing unit to provide an output voltage to drive the extruder screw at a speed which takes into account the natural non-linearity of the extruder.

The electronic processing unit preferably includes a first memory means having stored therein the predetermined voltage data, and a second memory means storing said calculated value of the control voltage signal. Conceivably the first and second memory means are integral one with another. The electronic processing unit conveniently comprises a microprocessor.

The invention further resides in a method of controlling an extrusion machine including a drive motor adapted to drive an extruder screw, and a central control unit generating a control voltage signal to control the drive motor; the method comprising the steps of repeatedly calculating the value of the control voltage signal generated by the central control unit, comparing said calculated value with preprogrammed data comprising values for the control voltage and corresponding output voltages to determine a corresponding output voltage for said calculated value for the control voltage, and supplying said corresponding output voltage to drive motor to drive the extruder screw.

The invention further resides in an extrusion machine including an extruder screw; a screw drive motor adapted to drive the extruder screw; line drive means for controlling the line speed of the extruder; a central control unit adapted to generate a first control voltage signal to control the screw drive motor, and a second control voltage signal to control the line drive means, the first and second control voltage signals being proportional one to the other such as to produce an extrudate having a desired weight/metre; a diameter gauge for measuring the diameter of the extrudate; data logging means receiving the first and second control voltage signals and also signals from the diameter gauge, the data logging means being adapted to store data concerning the diameter of the extrudate for different values of the first and second control voltage signals; and an electronic processing unit adapted to receive data from the data logging means to produce a store of voltage data comprising values for a selected control voltage and corresponding values for output voltages, the selected control voltage being either the first or second control voltage signal, the electronic processing unit being further adapted to calculate repeatedly the value of the selected control voltage generated by the central control unit, compare said calculated value with the values for the selected control voltage in the store of voltage data to determine a corresponding output voltage for the calculated value, and supply said output voltage to a selected one of either the screw drive motor or the line drive means, the predetermined voltage data being such as to maintain the extrudate substantially at the desired weight/metre regardless of the line speed of the extruder.

The diameter of the extrudate as measured and recorded by the data logging means can thereby be used to generate the store of voltage data which the electronic processing unit employs to adjust the selected control voltage in order to linearise the extruder. Preferably the selected control voltage is the first control voltage signal and the electronic processing means is adapted to supply the output voltage to the screw drive motor to drive the extruder screw. The electronic processing unit conveniently includes a first memory means having stored therein the voltage data comprising values for the selected control voltage and corresponding values for output voltages, and a second memory means storing said calculated value of the selected control voltage.

The invention further resides in a method of controlling an extruder including an extruder screw, a screw drive motor adapted to drive the extruder screw, and line drive means for controlling the line speed of the extruder; the method comprising the steps of compiling data concerning the diameter of the extrudate, a first control voltage signal controlling the screw drive motor, and a second control voltage signal controlling the line drive means; calculating, from the compiled data, voltage data comprising values for a selected control voltage and corresponding values for output voltages, the selected control voltage being either the first or second control voltage signal; repeatedly calculating the value of the selected control voltage; comparing said calculated value with the values for the selected control voltage in the voltage data to determine a corresponding output voltage for the calculated value; and supplying said output voltage to a selected one of either the screw drive motor or the line drive means, the voltage data being such as to maintain the extrudate substantially at a desired weight/metre regardless of the line speed of the extruder. As before the selected control voltage is preferably the first control voltage signal in which case the output signal is supplied to the screw drive motor to drive the extruder screw.

The invention will now be further described, by way of example only, with reference to the accompanying drawings in which

Figure 1 is a schematic diagram of an extrusion machine according to one embodiment of the invention; and

Figure 2 is a schematic diagram of an extrusion machine according to an alternative embodiment of the invention.

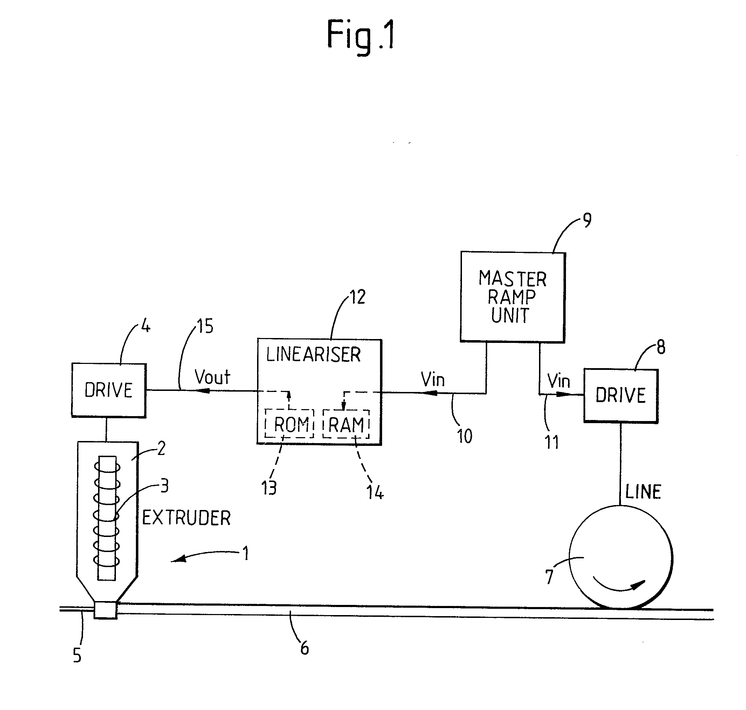

Referring to Figure 1, an extuder shown generally at 1 comprises a barrel 2 containing a rotatable screw 3 driven by a screw drive motor 4. Extrudate emerging from the barrel 2 is formed around a core 5 to form a cable 6, the cable being moved by a roller 7 driven by a line speed motor 8. A central control unit 9 generates voltage signals for controlling the operating speeds of the screw drive motor 4 and the line speed motor 8, the voltage signals being transmitted via lines 10 and 11 respectively. Between the central control unit 9 and the screw drive motor 4 is a linearising microprocessor 12, the microprocessor including a first memory 13 and a second memory 14. The microprocessor receives input voltage signals from the central control unit 9 via line 10, and sends output signals to the screw drive motor 4 via line 15.

The operation of the extrusion machine is as follows. The first memory 13 is preprogrammed with voltage data comprising look-up tables for input voltages from the central control unit 9 and corresponding output voltages to be supplied to the screw drive motor 4. The voltage data will be calculated to take into account the known non-linearity of the extruder, and may vary depending on the material to be extruded. Accordingly the first memory 13 may be reprogrammed or replaced by an alternative memory if a different material is to be extruded.

The central control unit 9 generates voltage signals on lines 10 and 11 to control the screw drive motor 4 and the line speed motor 8 to produce a cable having a predetermined weight/metre of extrudate. The voltage on line 10 is stored in the second memory 14, compared with the values for input voltages in the first memory 13 and, when an equivalent value for the input voltage is found, the corresponding value for the output voltage is read off. This output voltage is generated on line 15 by the microprocessor 12, and used to control the speed of the screw drive motor 4 and hence the extruder screw 3.

When the central control unit 9 increases or decreases the screw speed and line speed, a different voltage will appear on line 10. The above described process is repeated to provide an adjusted voltage value on line 15 to drive the screw drive motor. Thus as the extruder is ramped up and down, the linearising microprocessor 12 will adjust the control signals to the extruder screw to take into account any non-linearity in the extruder throughput.

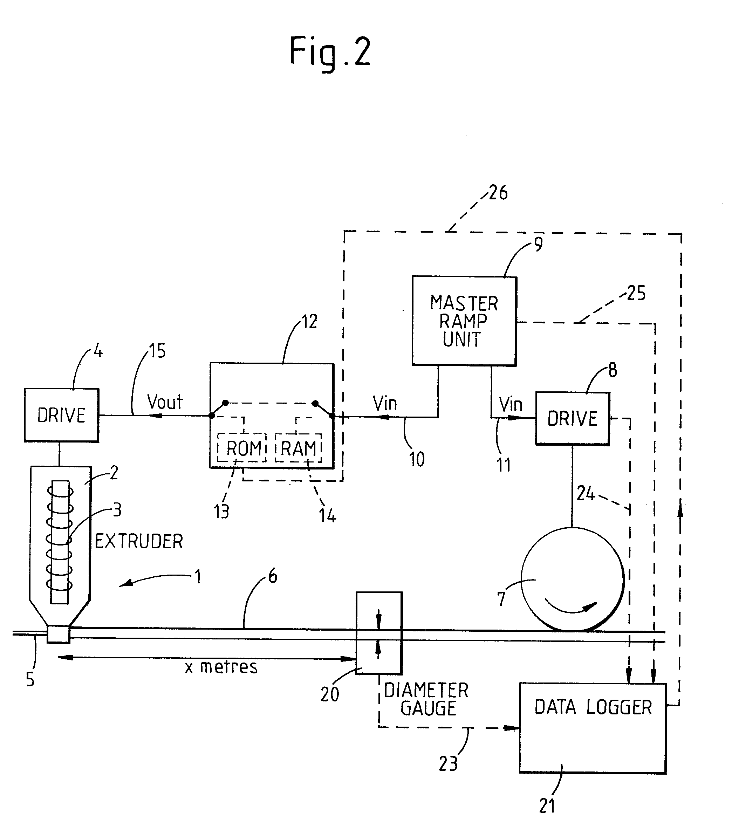

Figure 2 illustrates one way in which the voltage data for the first memory 13 can be generated. The apparatus is as described previously with reference to Figure 1, with the addition of a diameter gauge 20 positioned a known distance downstream of the extruder 1, and a data logger 21 receiving signals from the diamater gauge 20 via line 23. The data logger 21 also receives signals from the line speed motor 8 via line 24, and from the central control unit 9 via line 25. The data logger is additionally in communication with the linearising microprocessor 12 via line 26.

With the microprocessor 12 switched to transfer the voltage generated on line 10 directly through to line 15 and the screw drive motor 4, the central control unit 9 drives the extruder at various line speeds. During this process the data logger 21 records the diameter of the cable 6 as measured by the diameter gauge 20, together with the voltages generated by the central control unit 9 on lines 10 and 11. The change in diameter of the cable is a direct indication of the non-linearity of the extruder throughput and from the diameter measurements the data logger 21 calculates the voltage data required to adjust the screw drive motor 4 to maintain the diameter of the cable constant for all screw speeds. The voltage data calculated by the data logger 21 is then downloaded into the first memory 13 via line 26.

When the microprocessor 12 is switched to bring into operation the second memory 14 and the first memory 13, the voltage data programmed into the first memory is used to generate an output voltage on line 15 as previously described with reference to Figure 1. In this way the non-linearity of the extruder throughput is eliminated producing a substantially constant diameter of cable for all extruder speeds. Alternatively, where the core 5 is non-circular producing a correspondingly non-circular cable, the weight/metre of the extrudate of the resulting cable will be substantially constant.

The linearising microprocessor of Figures 1 and 2 is described as being located between the central control unit 9 and the screw drive motor 4 providing adjusted voltage signals to control the speed of the extruder screw. It will be appreciated that the microprocessor 12 could alternatively be situated between the central control unit 9 and the line speed motor 8. With this arrangement the microprocessor would generate adjusted voltage signals to control the line speed of the extruder. With either arrangement, the ratio between the screw speed and the line speed is adjusted so as to produce a substantially constant weight/metre of extrudate from the extrusion machine at all speeds thereof.

## Claims

1. An extrusion machine including an extruder screw (3); a drive motor (4) adapted to drive the extruder screw (3); a central control unit (9) adapted to generate a control voltage signal to control the drive motor (4); characterised in that there is provided an electronic processing unit (12) programmable with predetermined voltage data comprising values for control voltages and corresponding values for output voltages, the electronic processing unit (12) being adapted to calculate repeatedly the value of the control voltage signal generated by the central control unit (9), compare said calculated value with the value for control voltages in the predetermined voltage data to determine a corresponding output voltage for the calculated value, and supply said output voltage to the drive motor (4) to drive the extruder screw (3).

2. An extrusion machine including an extruder screw (3); a screw drive motor (4) adapted to drive the extruder screw (3); line drive means (8) for controlling the line speed of the extruder; a central control unit (9) adapted to generate a first control voltage signal to control the screw drive motor (4) and a second control voltage signal to control the line drive means (8), the first and second control voltage signals being proportional one to the other such as to produce an extrudate (6) having a desired weight/metre; characterised in that there is provided an electronic processing unit (12) programmable with predetermined voltage data comprising values for a selected control voltage and corresponding values for output voltages, the selected control voltage being either the first or second control voltage signal, the electronic processing unit (12) being adapted to calculate repeatedly the value of the selected control voltage generated by the central control unit (9), compare said calculated value with the values for the selected control voltage in the predetermined voltage data to determine a corresponding output voltage for the calculated value, and supply said output voltage to a selected one of either the screw drive motor (4) or the line drive means (8), the predetermined voltage data being such as to maintain the extrudate (6) substantially at the desired weight/metre regardless of the line speed of the extruder.

3. An extrusion machine according to Claim 2 characterised in that the selected control voltage is the first control voltage signal and the electronic processing unit (12) is adapted to supply the output voltage to the screw drive motor (4) to drive the extruder screw (3).

4. An extrusion machine according to any of Claims 1 to 3 characterised in that the electronic processing unit (12) includes a first memory means (13) having stored therein the predetermined voltage data, and a second memory means (14) storing said calculated value of the control voltage signal.

5. A method of controlling an extrusion machine including a drive motor (4) adapted to drive an extruder screw (3) and a central control unit (9) generating a control voltage signal to control the drive motor (4); the method being characterised by the steps of repeatedly calculating the value of the control voltage signal generated by the central control unit (9), comparing said calculated value with preprogrammed data comprising values for the control voltage and corresponding output voltages to determine a corresponding output voltage for said calculated value for the control voltage, and supplying said corresponding output voltage to the drive motor (4) to drive the extruder screw (3).

6. An extrusion machine including an extruder screw (3); a screw drive motor (4) adapted to drive the extruder screw (3); line drive means (8) for controlling the line speed of the extruder; a central control unit (9) adapted to generate a first control voltage signal to control the screw drive motor (4), and a second control voltage signal to control the line drive means (8), the first and second control voltage signals being proportional one to the other such as to produce an extrudate (6) having a desired weight/metre; and a diameter gauge (20) for measuring the diameter of the extrudate (6);

characterised in that there is provided data logging means (21) receiving the first and second control voltage signals and also signals from the diameter gauge (20), the data logging means (21) being adapted to store data concerning the diameter of the extrudate (6) for different values of the first and second control voltage signals; and an electronic processing unit (12) adapted to receive data from the data logging means (21) to produce a store of voltage data comprising values for a selected control voltage and corresponding values for output voltages, the selected control voltage being either the first or second control voltage signal, the electronic processing unit (12) being further adapted to calculate repeatedly the value of the selected control voltage generated by the central control unit (9), compare said calculated value with the values for the selected control voltage in the store of voltage data to determine a corresponding output voltage for the calculated value, and supply said output voltage to a selected one of either the screw drive motor (4) or the line drive means (8), the predetermined voltage data being such as to maintain the extrudate (6) substantially at the desired weight/meter regardless of the line speed of the extruder.

7. An extrusion machine according to Claim 6 characterised in that the selected control voltage is the first control voltage signal and the electronic processing unit (12) is adapted to supply the output voltage to the screw drive motor (4) to drive the extruder screw (3).

8. An extrusion machine according to Claim 6 or Claim 7 characterised in that the electronic processing unit (12) includes a first memory means (13) having stored therein the voltage data comprising values for the selected control voltage and corresponding values for output voltages, and a second memory means (14) storing said calculated value of the selected control voltage.

9. A method of controlling an extruder including an extruder screw (3), a screw drive motor (4) adapted to drive the extruder screw (3), and line drive means (8) for controlling the line speed of the extruder; the method being characterised by the steps of compiling data concerning the diameter of the extrudate (6), a first control voltage signal controlling the screw drive motor (4), and a second control voltage signal controlling the line drive means (8); calculating, from the compiled data, voltage data comprising values for a selected control voltage and corresponding values for output voltages, the selected control voltage being either the first or second control voltage signal; repeatedly calculating the value of the selected control voltage, comparing said calculated value with the values for the selected control voltage in the voltage data to determine a corresponding output voltage for the calculated value; and supplying said output voltage to a selected one of either the screw drive motor (4) or the line drive means (8), the voltage data being such as to maintain the extrudate (6) substantially at a desired weight/metre regardless of the line speed of the extruder.

10. A method according to Claim 9 characterised in that the selected control voltage is the first control voltage signal and the output signal is supplied to the screw drive motor (4) to drive the extruder screw (3).

Fig.1

Fig.2